# FASCICULE DE BREVET EUROPEEN

(11) **EP 4 102 308 B1**
(45) Date de publication et mention de la délivrance du brevet: **19.02.2025**
(21) Numéro de dépôt: 21178264.4
(22) Date de dépôt: 08.06.2021
(51) Int. Cl.: G04B 19/32

(54) **PROCÉDÉ DE FABRICATION D'UN COMPOSANT HORLOGER LUMINESCENT**
VERFAHREN ZUR HERSTELLUNG EINER LEUCHTENDEN UHRENKOMPONENTE
METHOD FOR MANUFACTURING A LUMINESCENT CLOCK COMPONENT

(43) Date de publication de la demande: 14.12.2022
(73) Titulaire: The Swatch Group Research and Development Ltd, 2074 Marin (CH)
(72) Inventeur: NAPOLI, Sophie, 2000 Neuchâtel (CH); FRANÇOIS, Nicolas, 2000 Neuchâtel (CH)
(74) Mandataire: ICB SA

(56) Documents cités:
- CH-B1- 716 226
- JP-A- H11 281 764
- US-B2- 10 520 894

## Description

### Domaine technique

L'invention est relative à un procédé de fabrication d'un composant horloger luminescent.

### Arrière-plan technologique

L'utilisation de matériaux photoluminescents est assez répandue sur le marché et ce pour des applications variées, telles que les aiguilles ou les index.

La technologie de phosphorescence est couramment utilisée dans le domaine de l'horlogerie via différentes méthodes de décoration afin d'illuminer aiguilles, cadrans et autres composants. Le document US 10 520 894 B2 présente un composant horloger composé d'une matrice polymère intégrant des pigments phosphorescents et/ou fluorescents.

La technologie de fluorescence est également utilisée pour la décoration des composants d'habillage interne via la tampographie ou le sprayage utilisant les pigments fluorescents afin de décorer la montre et ce en plusieurs couleurs.

D'autre part, les cadrans et les aiguilles sont habituellement réalisés dans une matière métallique puis, après plusieurs étapes de terminaisons, décorés avec une encre soit phosphorescente, soit fluorescente.

Cette conception présente plusieurs inconvénients :
- la limitation des performances lumineuse, les épaisseurs des encres phosphorescentes et fluorescentes sont limitées à une centaine de microns avec les procédés de décoration actuels ;
- une complexification des procédés de décoration, une sous couche blanche est en effet nécessaire avant la décoration phosphorescente afin d'avoir un décor opaque et de maximiser les performances ;
- les composants complètement opaques limitant le design.

### Résumé de l'invention

L'invention vise à fournir un procédé de fabrication d'un composant horloger luminescent qui ne souffre pas des inconvénients décrits ci-dessus.

La présente invention concerne un procédé de fabrication composant horloger luminescent pour un objet portable comprenant les étapes suivantes :
- mélanger une résine époxy et d'un pigment phosphorescent à hauteur de 40% massique ;
- ajouter au mélange un pigment fluorescent à hauteur de 3% massique ;
- optionnellement, ajouter du silane au mélange à hauteur de 10% massique;
- ajouter une durcisseur et mélanger le tout mécaniquement pour obtenir une solution homogène ;
- couler sous vide la solution obtenue dans un moule et réticuler la solution pour obtenir une pièce moulée luminescente ;
- après durcissement, retirer la pièce du moule et l'usiner pour obtenir le composant horloger luminescent.

Conformément à d'autres variantes avantageuses de l'invention :
- le procédé comprend une dernière étape optionnelle au cours de laquelle le composant horloger est décoré par impression ou gravage ;
- la solution obtenue est coulée dans le moule sur une épaisseur d'au moins 0.4 mm ;
- la résine utilisée est choisie parmi les résine de type polyépoxyde ou de type polyuréthane ;
- la solution obtenue est réticulée pendant 4 heures à 80°C ;
- le durcisseur est à base d'anhydride d'acide, de phénol, d'amine, de diisocyanates ou triisocyanates avec des polyols contenant au moins deux groupes hydroxyl ;
- le composant horloger luminescent formé est un cadran ou une aiguille.

### Description détaillée

La présente invention concerne un procédé de fabrication d'un composant horloger luminescent pour un objet portable.

Par luminescent, on entend que le composant est photoluminescent, fluorescent, phosphorescente, ou une combinaison.

Par phosphorescent, on entend un élément ayant la propriété de pouvoir absorber de la lumière et de la réémettre à une longueur d'onde plus grande. L'émission persiste un certain temps quand l'excitation lumineuse a cessé. L'encre contient au moins un agent photoluminescent pour conférer les propriétés de photoluminescence à l'encre. Préférentiellement, l'agent luminescent est un agent fluorescent. Il est, avantageusement, choisi parmi les fluorophores inorganiques et les complexes organo-lanthanides. Selon une autre alternative, l'agent fluorescent peut également être choisi parmi les fluorophores organiques. Il peut s'agir, par exemple, de fluorescéine, d'europium 1 ,3-diphenyl-1 ,3- propanedionate-1 ,10-phenantroline, d'oxysulfure de gadolinium dopé, d'aluminate de baryum et magnésium dopé, d'aluminate de lithium dopé, de molybdate de strontium dopé...

Par fluorescent, on entend un élément ayant la propriété de pouvoir absorber de la lumière et de la réémettre à une longueur d'onde plus grande. L'émission cesse quand l'excitation lumineuse cesse.

Les diverses étapes du procédé de fabrication selon l'invention vont maintenant être décrite.

Au cours d'une première étape, on effectue un mélange d'une résine et d'un pigment phosphorescent à hauteur de 40% massique de manière à obtenir une couleur de jour suffisamment voyante sans faire de compromis sur les performances phosphorescentes. La quantité de particules luminescentes est choisie de manière à être suffisante pour pouvoir démarquer le composant horloger décoré et le rendre facilement et immédiatement visible dans l'obscurité. De tels pigments peuvent par exemple être des « Daylight Fluorescent Pigments » de chez Aralon Colors, d'autres types de pigments peuvent bien évidemment être utilisés.

La résine utilisée peut être une résine de type polyépoxyde ou polyuréthane. Les résines polyépoxydes communément appelées « époxy » sont des résines fabriquées par polymérisation de monomères époxyde avec un durcisseur.

Ensuite un pigment fluorescent est ajouté à hauteur de 3% massique, ce qui permet de modifier la couleur visible de jour car les pigments fluorescents sont colorés. Ils permettent aussi de renforcer et de modifier l'effet phosphorescent. Par exemple si utilise un pigment phosphorescent émission bleue « Light Blue », et qu'on ajoute du pigment fluorescent rose, alors la couleur finale d'émission de nuit sera rosée/violette. Il est donc possible de faire correspondre la couleur visible de jour avec la couleur visible de nuit.

Selon un mode de réalisation optionnel de l'invention, on ajoute du silane au mélange à hauteur maximale de 10% massique pour ajuster la viscosité de la résine et ainsi rendre le dépôt du mélange dans le moule plus rapide et plus facile.

Au cours de l'étape suivante, on ajoute un durcisseur et on effectue un mélangeage mécanique, tel qu'un mélangeur planétaire centrifuge de type « Speedmixer » pour obtenir une solution homogène et bien répartir les particules luminescentes dans la résine et ainsi éviter des amas de particules qui nuiraient à la fois au rendu visuel sur le composant horloger et au performance de l'encre luminescente.

Le durcisseur peut être à base d'anhydride d'acide, de phénol ou d'amine. Les résines polyuréthanes peut aussi être utilisées, en faisant réagir des di- ou triisocyanates avec des polyols contenant au moins deux groupes hydroxyl.

La solution homogène obtenue est ensuite coulée sous vide dans un moule. La solution obtenue est coulée dans le moule sur une épaisseur d'au moins 0.4mm, l'épaisseur variant en fonction du composant horloger que l'on souhaite obtenir à la fin. Il a été constaté par les inventeurs qu'en dessous une épaisseur de 0.4 mm, les pièces sont trop fragiles et ne se tiennent pas mécaniquement (Par exemple une aiguille ne supporte pas son propre poids). Ainsi, afin de garantir de bonnes performances et une bonne tenue, il faut une épaisseur minimum 0.4 mm.

Il n'y a pas de limitation supérieure d'épaisseur. Il est possible de faire directement l'épaisseur de la pièce et de découper la pièce si cette dernière est plane. Il est également possible de mouler des pièces plus épaisses et de les usiner pour aussi les reprendre en épaisseur. Par exemple, pour des aiguilles afin de pouvoir découper le dessus de l'aiguille plus large et un pied plus fin.

Une fois coulée sous vide, la solution homogène est réticulée pour obtenir une pièce moulée luminescente. Le temps et la température de réticulation sont bien évidemment amenés à varier selon la résine choisie. La réticulation peut par exemple s'effectuer sur 4 heures à une température de 80°C.

Bien évidemment, le temps et la température de réticulation dépendent de la fiche technique de la résine utilisée. Dans l'exemple présent, le temps de réticulation de 4 heures à 80°C correspond aux paramètres de la résine époxy E2830.

Enfin, une fois la réticulation terminée, la pièce moulée est retirée du moule pour effectuer une découpe au laser et obtenir le composant horloger luminescent.

Finalement, une dernière étape optionnelle consiste à décorer par impression ou gravage le composant horloger obtenu de manière à ce que seulement une partie luminescente du composant soit visible.

Selon l'invention, un tel procédé permet d'obtenir un cadran ou des aiguilles luminescente.

### Exemple de réalisation.

Une résine époxy « E2830 » fabriqué par The Swatch Group R&D, Division Polymères est utilisée.

A la résine E2830 est ajouté un pigment photoluminescent à hauteur de 40% massique (particule size D50 : 15-20 µm).

Un pigment fluorescent est ensuite ajouté à hauteur de 3% massique.

A ce mélange peut être ajouté du silane (Dynasylan Glyeo de chez Evonik) à une hauteur maximale de 10% massique, à ajuster en fonction de la viscosité du mélange désirée.

Le mélange est homogénéisé puis le durcisseur est rajouté.

Un mélangeage mécanique est effectué à l'aide d'une machine tel qu'un mélangeur planétaire centrifuge de type « Speedmixer » afin d'avoir une solution homogène.

Le mélange ainsi obtenu est ensuite coulé dans un moule de façon à avoir une épaisseur de 0.4mm. La résine est ensuite réticulée selon les conditions annoncées par le fournisseur (ici pour la résine E2830, 4 heures dans un four à 80°C).

Une fois la forme démoulée, celle-ci est ensuite découpée via laser afin d'obtenir les pièces horlogères souhaitées.

## Revendications

1. Procédé de fabrication d'un composant horloger luminescent pour un objet portable comprenant les étapes suivantes :
- mélanger une résine époxy et d'un pigment phosphorescent à hauteur de 40% massique ;
- ajouter au mélange un pigment fluorescent à hauteur de 3% massique ;
- optionnellement, ajouter du silane au mélange à hauteur de 10% massique;
- ajouter un durcisseur et mélanger le tout mécaniquement pour obtenir une solution homogène ;
- couler sous vide la solution obtenue dans un moule et réticuler la solution pour obtenir une pièce moulée luminescente ;
- après durcissement, retirer la pièce du moule et la découper au laser pour obtenir le composant horloger luminescent.

2. Procédé de fabrication selon la revendication 1 comprenant une dernière étape optionnelle au cours de laquelle le composant horloger est décoré par impression ou gravage.

3. Procédé de fabrication selon la revendication 1 ou 2, dans lequel la solution obtenue est coulée dans le moule sur une épaisseur d'au moins 0.4mm.

4. Procédé de fabrication selon les revendication 1 à 3, dans lequel la résine utilisée est choisie parmi les résine de type polyépoxyde ou de type polyuréthane.

5. Procédé de fabrication selon les revendications 1 à 4, dans lequel la solution obtenue est réticulée pendant 4 heures à 80°C.

6. Procédé de fabrication selon les revendications 1 à 5, dans lequel le durcisseur est à base d'anhydride d'acide, de phénol, d'amine, de diisocyanates ou triisocyanates avec des polyols contenant au moins deux groupes hydroxyl.

7. Procédé de fabrication selon les revendications 1 à 5, dans lequel le composant horloger luminescent formé est un cadran ou une aiguille.

## Patentansprüche

1. Verfahren zum Herstellen einer lumineszenten Uhrmacherkomponente für einen tragbaren Gegenstand, die folgenden Schritte umfassend:
- Mischen eines Epoxidharzes und eines phosphoreszierenden Pigments in einer Menge von 40 Ma.-%;
- Zugeben zu dem Gemisch eines fluoreszierenden Pigments in einer Menge von 3 Ma.-%;
- optional Zugeben von Silan zu dem Gemisch in einer Menge von 10 Ma.-%;
- Zugeben eines Härters und mechanisch Mischen des Ganzen, um eine homogene Lösung zu erhalten;
- Gießen der erhaltenen Lösung unter Vakuum in eine Form und Vernetzen der Lösung, um ein lumineszentes Formteil zu erhalten;
- nach dem Aushärten Entnehmen des Teils aus der Form und Laserschneiden, um die lumineszenten Uhrmacherkomponente zu erhalten.

2. Verfahren zum Herstellen nach Anspruch 1, das einen letzten optionalen Schritt umfasst, im Laufe dessen die Uhrmacherkomponente durch Bedrucken oder Gravieren verziert wird.

3. Verfahren zum Herstellen nach Anspruch 1 oder 2, wobei die erhaltene Lösung in einer Dicke von mindestens 0,4 mm in die Form gegossen wird.

4. Verfahren zum Herstellen nach den Ansprüchen 1 bis 3, **dadurch gekennzeichnet, dass** das verwendete Harz aus den Harzen vom Polyepoxidtyp oder vom Polyurethantyp ausgewählt wird.

5. Verfahren zum Herstellen nach den Ansprüchen 1 bis 4, wobei die erhaltene Lösung 4 Stunden lang bei 80°C vernetzt wird.

6. Verfahren zum Herstellen nach den Ansprüchen 1 bis 5, wobei der Härter auf Basis von Säureanhydrid, Phenol, Amin, Diisocyanat oder Triisocyanat mit Polyolen ist, die mindestens zwei Hydroxylgruppen enthalten.

7. Verfahren zum Herstellen nach den Ansprüchen 1 bis 5, wobei das gebildete lumineszente Uhrmacherkomponente ein Zifferblatt oder ein Zeiger ist.

## Claims

1. Method for manufacturing a luminescent horological component for a portable object comprising the following steps:
- mixing an epoxy resin and a phosphorescent pigment in an amount of 40% by mass;
- adding to the mixture a fluorescent pigment in an amount of 3% by mass;
- optionally, adding silane to the mixture in an amount of 10% by mass;
- adding a hardener and mixing everything mechanically to obtain a homogenous solution;
- pouring under vacuum the solution obtained into a mould and cross-linking the solution to obtain a luminescent moulded part;
- after hardening, removing the part from the mould and blanking it by laser to obtain the luminescent horological component.

2. Manufacturing method according to claim 1, comprising a last optional step during which the horological component is decorated by printing or etching.

3. Manufacturing method according to claim 1 or 2, wherein the solution obtained is poured into the mould over a thickness of at least 0.4mm.

4. Manufacturing method according to claims 1 to 3, wherein the resin used is chosen from the resins of the polyepoxide type or of the polyurethane type.

5. Manufacturing method according to claims 1 to **4,** wherein the solution obtained is cross-linked for 4 hours at 80°C.

6. Manufacturing method according to claims 1 to 5, wherein the hardener contains acid anhydride, phenol, amine, diisocyanates or triisocyanates with polyols containing at least two hydroxyl groups.

7. Manufacturing method according to claims 1 to 5, wherein the luminescent horological component formed is a dial or a hand.
